(19) Europäisches Patentamt
European Patent Office
Office européen des brevets

(11) **EP 1 530 407 B1**

(12) **EUROPÄISCHE PATENTSCHRIFT**

(45) Veröffentlichungstag und Bekanntmachung des Hinweises auf die Patenterteilung:
**02.10.2013 Patentblatt 2013/40**

(51) Int Cl.:
*H02M 3/155* (2006.01)   *H02M 1/34* (2007.01)
*H05B 33/08* (2006.01)   *H05B 41/285* (2006.01)

(21) Anmeldenummer: **04025220.7**

(22) Anmeldetag: **22.10.2004**

(54) **Elektronisches Vorschaltgerät mit bei Lampenausfall weiterzubetreibendem Wandler**

Electronic ballast wherein the converter remains active in the event of a lamp failure

Ballast électronique dans lequel le convertisseur reste actif en cas de défaillance de la lampe

(84) Benannte Vertragsstaaten:
**DE FR GB IT SE**

(30) Priorität: **05.11.2003 DE 10351621**

(43) Veröffentlichungstag der Anmeldung:
**11.05.2005 Patentblatt 2005/19**

(73) Patentinhaber: **OSRAM GmbH**
**80807 München (DE)**

(72) Erfinder: **Storm, Arwed**
**85221 Dachau (DE)**

(74) Vertreter: **Raiser, Franz**
**OSRAM GmbH**
**Intellectual Property IP**
**Postfach 22 13 17**
**80503 München (DE)**

(56) Entgegenhaltungen:
**EP-A2- 1 326 484    EP-A2- 1 397 029**

## Beschreibung

### Technisches Gebiet

Diese Erfindung betrifft ein elektronisches Vorschaltgerät für Licht emittierende Einrichtungen, insbesondere für Lampen, aber auch beispielsweise für LEDs und LED-Module.

### Stand der Technik

Elektronische Vorschaltgeräte zum Betreiben von Lampen oder LEDs und LED-Modulen sind an sich seit langer Zeit bekannt und gebräuchlich. Sie weisen regelmäßig einen Wandler auf, der die Licht emittierende Einrichtung betreibt und mit Leistung versorgt. Neben sog. selbst erregten Wandlerkonzepten werden häufig Steuerungen zum Ansteuern dieses Wandlers eingesetzt. Im Fall eines Lampenausfalls schalten sich die elektronischen Vorschaltgeräte i. d. R. aus Sicherheitsgründen automatisch ab.

Die US 2003/0025464 A1 zeigt ein solches Vorschaltgerät für eine Gasentladungslampe, das bei einem Lampenausfall den Wandler abschaltet oder alternativ die Ansteuerfrequenz des Wandlers so erhöht, dass keine für das Vorschaltgerät schädlichen Spannungen oder Ströme entstehen.

Das Dokument Gregory Ivensky, Ilya Zeltser, Sam Ben- Yaakov, "New Snubbers with Energy Recovery into a Local Power Supply", PESC'03 34TH ANNUAL POWER ELECTRONICS SPECIALISTS CONFERENCE, ACAPULCO, MEXICO, 15- 19 Juni 2003, Band 3 von 4, Conf. 34, Seiten 1327- 1332, ISBN 0- 7803-7754- 0, XP10647677 zeigt eine Schaltung, welche die Funktion eines Trapezkondensators übernimmt und gleichzeitig als Hilfsspannungsquelle dient.

### Darstellung der Erfindung

Der vorliegenden Erfindung liegt das technische Problem zugrunde, ein verbessertes elektronisches Vorschaltgerät des beschriebenen Typs anzugeben.

Die Erfindung richtet sich auf ein elektronisches Vorschaltgerät für eine Licht emittierende Einrichtung mit einem Wandler zur Versorgung der Licht emittierenden Einrichtung und einer Steuerung zum Steuern des Wandlers, wobei der Wandler mindestens einen Schalttransistor mit einem parallel liegenden Trapezkondensator aufweist und wobei beim Umladen des Trapezkondensators im Schalttransistor Schaltverluste auftreten, dadurch gekennzeichnet, dass die Steuerung dazu ausgelegt ist, im Fall eines Ausfalls der Licht emittierenden Einrichtung den Wandler weiterzubetreiben, um eine Hilfsversorgung für die Steuerung aufrecht zu erhalten, und dabei den mindestens einen Schalttransistor bei mindestens 80% des an ihm anliegenden Spannungsmaximums so lange einzuschalten, bis die im Trapezkondensator gespeicherte Ladung abgebaut ist.

Bevorzugte Ausgestaltungen sind in den abhängigen Ansprüchen angegeben und werden im Folgenden näher erläutert.

Der Grundgedanke der Erfindung besteht darin, im Fall eines Ausfalls der Licht emittierenden Einrichtung, also beispielsweise eines Lampenausfalls in Form eines Wendelbruchs während des Betriebs, oder auch nach erfolglosen oder nicht einwandfrei verlaufenden Zündversuchen, nicht das gesamte Vorschaltgerät abzuschalten. Vielmehr soll der in dem Vorschaltgerät enthaltene Wandler zumindest in einem minimalen Umfang weiterbetrieben werden. Um dabei zu verhindern, dass der Weiterbetrieb des Wandlers zu Schäden führt, etwa zu zu großen Spannungen an Speicherkondensatoren, muss die von dem Wandler umgesetzte Leistung im Rahmen der Erfindung verbraucht werden. Hierzu sollen in dem Vorschaltgerät Verluste erzeugt werden.

Die Erfindung schafft damit die Möglichkeit, bestimmte Funktionen in dem Vorschaltgerät und insbesondere in der Steuerung trotz eines Endes oder Nichteinsetzens des Betriebs der Lampe (die im Folgenden nicht einschränkender Weise stellvertretend für die Licht emittierende Einrichtung steht) weiterzuerhalten. Insbesondere können Informationen über den Grund des Lampenausfalls oder andere wesentliche und in dem Vorschaltgerät vorliegende Informationen weitergespeichert und abrufbar bleiben, ohne deswegen aufwendige Speichertypen versenden zu müssen, die auch im stromfreien Zustand ihre Informationen behalten. Dies gilt jedenfalls solange, wie die Netzversorgung an dem Vorschaltgerät anliegt. Insbesondere kann damit auch erreicht werden, dass in dem Vorschaltgerät, insbesondere der Steuerung, die Information abgelegt wird, dass die Lampe nicht funktioniert und damit erneute Startversuche unterbleiben. Erst wenn der Benutzer den Netzschalter aus- und wieder einschaltet, wird ein neuer Startversuch unternommen. Dies ist aber nur eine der denkbaren Anwendungsmöglichkeiten der Erfindung, die grundsätzlich durch den fortgesetzten Wandlerbetrieb verschiedene Nutzungsmöglichkeiten bietet, etwa weil eine Hilfsleistungsversorgung aufrechterhalten werden kann.

Die Erfindung betrifft dabei vor allem getaktete Wandler mit Schalttransistoren. Bevorzugt sind Vorschaltgeräte mit zweistufigen Wandterkonzepten, also solchen, bei denen ein die Lampe versorgender erster Wandler von einem zweiten Wandler versorgt wird. Bevorzugt sind dabei sog. Leistungsfaktorkorrekturschaltungen als zweiter Wandler, die den zeitlichen Verlauf der Leistungsaufnahme aus dem Netz optimieren (sog. PFC-Schaltungen für "Power Factor Correction Circuits").

Eine andere bevorzugte Ausgestaltung der Erfindung betrifft jedoch einstufige Wandlerkonzepte, in denen aus dem weiterbetriebenen Wandler selbst eine Hilfsversorgung gespeist werden kann.

Es ist in diesem Fall weiterhin bevorzugt, dass bei dem geschilderten Lampenausfall beide Wandler in einem gewissen Umfang weiterbetrieben werden.

Die erfindungsgemäßen Verluste in dem Vorschaltgerät sind Schaltverluste in einem Schalttransistor des oder eines der Wandler/s, und zwar vorzugsweise in dem die Lampe versorgenden ersten Wandler.

Um substantielle Schaltverluste zu erzeugen, wird erfindungsgemäß im Bereich des Spannungsmaximums an dem betreffenden Schalttransistor geschaltet, wobei es nicht unbedingt darauf ankommt, dieses Spannungsmaximum besonders genau zu treffen. Es reicht aus, im Bereich von mindestens 80% oder günstiger 90% der Spannungsamplitude zu schalten. Dies wird hier als ein Schalten im Spannungsmaximum aufgefasst.

Diese Schaltverluste treten dadurch auf, dass der Schalttransistor des Wandlers einen sog. Trapezkondensator umlädt. Der Begriff "Trapezkondensator" ist dem Fachmann bekannt für einen zu der Schaltstrecke des Schalttransistors parallel geschalteten Kondensator, der durch Umladevorgänge zu einem weicheren Schaltverhalten beiträgt und damit im Normalbetrieb eigentlich Verluste vermeidet. Es handelt sich um sog. Kommutierungshilfen, die gelegentlich auch als Snubber bezeichnet werden.

Der die Lampe versorgende Wandler kann eine Transistorhalbbrücke mit zwei Schalttransistoren sein. In diesem Fall, und grundsätzlich bei einer Mehrzahl von Schalttransistoren, ist es bevorzugt, dass die erwähnten Schaltverluste in den Schalttransistoren alternierend erzeugt werden.

Ferner werden die Schaltvorgänge, mit denen die erfindungsgemäßen Schaltverluste erzeugt werden, vorzugsweise nicht mit der gleichen Frequenz vorgenommen, mit der die Schaltung in der Freilaufphase schwingt (der oder die Schalttransistor/en abgeschaltet). Es wird vorzugsweise ein ganzzahliges Vielfaches der Periodendauer dieser Eigenschwingung eingesetzt, wobei sich diese Eigenschwingung natürlich von der Eigenfrequenz bei laufender Lampe unterscheidet. Bevorzugt sind Frequenzverhältnisse zwischen dem Faktor 2 und 10, vorzugsweise zwischen 4 und 8.

Bei der Steuerung handelt es sich vorzugsweise um eine Mikrocontrollersteuerung, die zumindest in Teilen durch eine von dem weiterlaufenden Wandler abgezweigte Versorgung oder Hilfsversorgung auch bei Lampenausfall in Betrieb bleibt.

Der zweite Wandler ist vorzugsweise ein SEPIC-Wandler als PFC-Schaltung. Ein wichtiger Anwendungsbereich liegt bei Vorschaltgeräten für klassische Niederdruckentladungslampen, d. h. sog. Leuchtstofflampen.

Die Erfindung wird im Folgenden anhand eines Ausführungsbeispiels näher erläutert, wobei die Einzelmerkmale auch in anderen Kombinationen erfindungswesentlich sein können.

**Kurze Beschreibung der Zeichnungen**

Fig. 1 zeigt ein stark schematisiertes Schaltbild eines erfindungsgemäßen Vorschaltgeräts als erstes Ausführungsbeispiel.

Fig. 2 zeigt reale Messkurven zu dem Vorschaltgerät aus Fig. 1.

Fig. 3 zeigt ein stark schematisiertes Schaltbild eines erfindungsgemäßen Vorschaltgeräts als zweites Ausführungsbeispiel.

**Bevorzugte Ausführung der Erfindung**

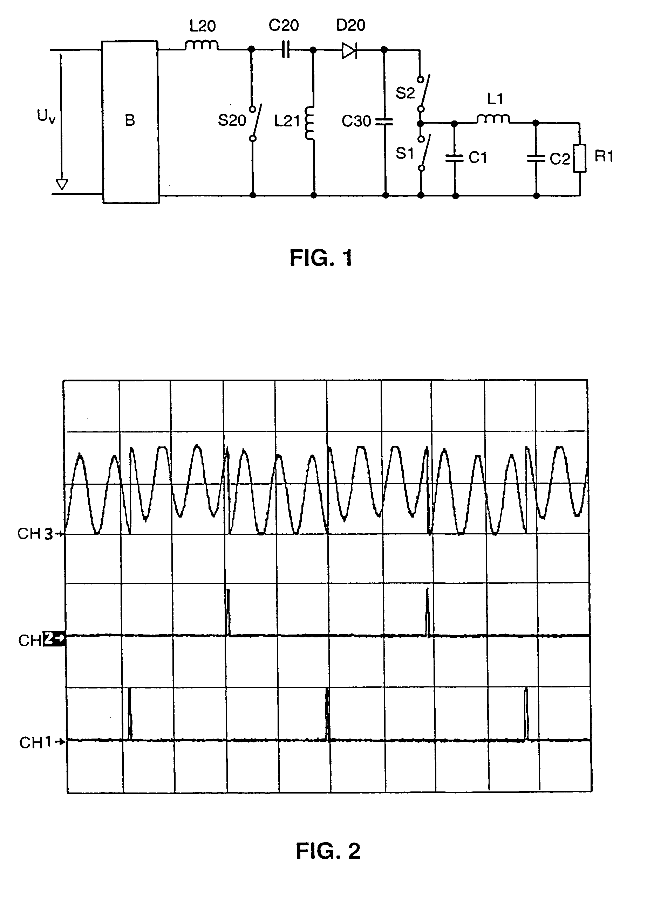

In Fig. 1 ist ein erfindungsgemäßes Vorschaltgerät mit zwei Wandlern darin schematisch dargestellt. Ein dem Fachmann bekannter und beispielsweise in der DE 101 10 239.9 beschriebener SEPIC-Wandler erzeugt eine Zwischenkreisspannung an einem Speicherkondensator C30, aus dem eine Halbbrückenschaltung mit zwei Schalttransistoren S1 und S2 gespeist wird.

In dem Vorschaltgerät nach Fig. 1 wird über einen Brückengleichrichter B eine Versorgungswechselspannung Uv, im Allgemeinen eine gewöhnliche Haushaltsnetzspannung, gleichgerichtet. Damit liegt in der Fig. 1 auf dem oben horizontal verlaufenden Leitungsast ein gleichgerichtetes positives Potential und auf dem dazu parallelen unteren ein gleichgerichtetes negatives Potential das i. d. R. das Bezugspotential darstellt. Die gleichgerichtete Wechselspannung bildet den Eingang des SEPIC-Wandlers, der die Drosseln L20 und L21, den Kondensator C20, die Gleichrichterdiode D20 und den Schalttransistor S20 aufweist und von einer nicht dargestellten Ansteuerschaltung angesteuert wird.

Der Kondensator C30 dient als Speicherkondensator und muss von dem SEPIC-Wandler aus der gleichgerichteten Wechselspannung auf eine möglichst konstante Gleichspannung aufgeladen werden. Dabei soll die Stromaufnahme aus dem Netz möglichst störungsfrei dem sinusförmigen Verlauf der Netzspannung nachgeführt werden.

Durch einen alternierenden Schaltbetrieb des Schalttransistors S20 wird die Spule L20 im Einschaltzustand aus der gleichgerichteten Netzspannung auf einen bestimmten Strom aufgeladen und im Ausschaltzustand des Schalttransistors S20 in den Kondensator C20 entladen. Gleichermaßen wird die Spule L21 in den Einschaltzeiten des Schalttransistors S20 aufgeladen und in den Ausschaltzeiten in den Speicherkondensator C20 entladen. Dabei ist die Polung der Diode D20 zu beachten. Es ergibt sich ein sog. lückender Betrieb, wenn die Ausschaltzeiten des Schalttransistors S20 ausreichend lang sind, damit der Strom in der Gleichrichterdiode D20 auf Null sinkt. Dabei bleibt im Mittel der Kondensator C20 im Wesentlichen auf dem Wert der momentan gleichgerichteten Versorgungsspannung aufgeladen. Daraus ergibt sich wiederum, dass der Speicherkondensator C30 in den Ausschaltzeiten lediglich mit der durch die Spule L21 erzeugten Induktionsspannung aufgeladen wird.

Durch ein entsprechendes Tastverhältnis, also Verhältnis zwischen den Einschaltzeiten und Ausschaltzeiten, und unter Berücksichtigung der Last R31 lässt sich damit im Wesentlichen eine beliebige Gleichspannung an dem Kondensator C30 einstellen, die insbesondere kleiner als die Amplitude der Netzspannung sein kann. Dann arbeitet der SEPIC-Wandler als Abwärtswandler. Der Kondensator C20 sorgt gewissermaßen für eine Entkopplung zwischen den beiden Drosseln L20 und L21, so dass sich, im Gegensatz zu reinen Aufwärtswandlern wie dem Hochsetzsteller, die durch die Spule L20 erzeugten Spannungen nicht zu der momentanen Netzspannung addieren.

Zu dem unteren der Schalttransistoren S1 und S2 liegt ein Trapezkondensator C1 parallel, der allerdings auch den oberen Schalttransistor S2 mitentlastet, also für beide Schalttransistoren als Trapezkondensator wirkt. Mit L1 ist eine übliche Lampendrossel und mit C2 ein üblicher Resonanzkondensator bezeichnet, wie sie bei der Verschaltung von Niederdruckentladungslampen bekannt sind. Die Niederdruckentladungslampe selbst ist nicht eingezeichnet. Repräsentativ dafür ist ein Widerstand R1 parallel zu C2 angeschlossen. Falls als Last eine Entladungslampe vorgesehen ist so muss ein sog. Koppelkondensator in Reihe dazugeschaltet sein.

Die Schalttransistoren S1 und S2 werden durch eine ebenfalls nicht eingezeichnete Mikrocontrollersteuerung getaktet, die ebenfalls den SEPIC-Wandler taktet.

Im Fall eines Lampenausfalls, etwa bei einem Elektrodenbruch im Betrieb oder nach erfolglosen Zündversuchen, betreibt die Mikrocontrollersteuerung erfindungsgemäß den SEPIC-Wandler weiter, und zwar auf einem möglichst geringen Leistungsniveau. Diese für die Funktion des SEPIC-Wandlers unverzichtbare Leistung würde den Speicherkondensator mit der Zwischenkreisspannung immer weiter aufladen, wenn sie nicht dissipiert wird. Deswegen wird erfindungsgemäß der Halbbrückenoszillator ebenfalls weiterbetrieben, jedoch mit einem vom Normalbetrieb abweichenden Betriebsmodus. Dieser ist in Fig. 2 dargestellt. Kanal CH1 und Kanal CH2 zeigen jeweils ein Ansteuersignal des oberen Halbbrückentransistors S2 bzw. des unteren Halbbrückentransistors S1. Kanal CH3 zeigt die Spannung am Mittenabgriff der Halbbrücke.

Die Schalttransistoren werden mit den angegebenen Steuersignalen versorgt und dementsprechend jeweils im Bereich der Extremwerte der in Fig. 2 oben eingezeichneten Spannungskurve des Mittenabgriffs der Halbbrücke für eine gewisse Zeit alternierend geschlossen. Während einer der Schalttransistoren geschlossen ist, wird der Trapezkondensator C1 umgeladen, wobei die Energie aus dem Trapezkondensator dabei vor allem in dem Eigenwiderstand des Schalttransistors, also beispielsweise in dessen Drain-Source-Widerstand im eingeschalteten Zustand, dissipiert wird. Die in dem Kondensator gespeicherte Ladung wird dabei durch ein ausreichend langes Einschalten des Schalttransistors, also etwa mit der zehnfachen maßgeblichen RC-Konstante, praktisch vollständig abgebaut, so dass die in dem Kondensator gespeicherte Energie praktisch vollständig dissipiert wird. Die insgesamt dissipierte Leistung errechnet sich dabei als

$$Pv = f \cdot C1 \cdot U^2$$

mit

Pv: Verlustleistung
f: Schaltfrequenz der Halbbrücke in diesem Betriebsmodus
C1: Kapazität des Trapezkondensators
U: Spannungshub an dem Trapezkondensator C1.

Bei diesem Beispiel ergibt sich aus Fig. 2, dass die Periodendauer des Halbbrückenbetriebs der sechsfachen Periodendauer des verbleibenden Lastkreises entspricht, so dass bei jedem sechsten Extrempunkt ein Schaltvorgang auftritt.

Die Erfindung liefert damit eine ohne zusätzliche Bauteile mögliche "Notbetriebsform" des Vorschaltgeräts mit weiterarbeitender PFC- Schaltung (SEPIC-Wandler) und zur Leistungsdissipation in dem beschriebenen Betriebsmodus betriebener Halbbrücke. Damit können aus dem SEPIC- Wandler abgezweigte Hilfsspannungen und Leistungsversorgungen, etwa für die Mikrocontrollersteuerung, weiterlaufen und Speicherinhalte erhalten bleiben. Insbesondere kann damit verhindert werden, dass die Mikrocontrollersteuerung "vergisst", dass ein Lampenausfall stattgefunden hat und deswegen immer wieder hochfährt und Zündversuche erzeugt. Wenn jedoch der Benutzer den Netzschalter ausschaltet und wieder einschaltet, so ist auch der hier beschriebene Betriebszustand unterbrochen worden und es wird ein neuer Zündversuch begonnen.

Die Erfindung ist im Prinzip z. B. auch bei einstufigen Wandlerkonzepten anwendbar, bei denen etwa eine Hilfsversorgung aus einer Halbbrückentopologie abgezweigt werden könnte. Hier könnte dann die Halbbrücke selbst in dem beschriebenen "Notbetriebszustand" weiterbetrieben werden, wobei die Mikrocontrollersteuerung oder eine andere Steuerung aus der Halbbrücke selbst versorgt bleibt.

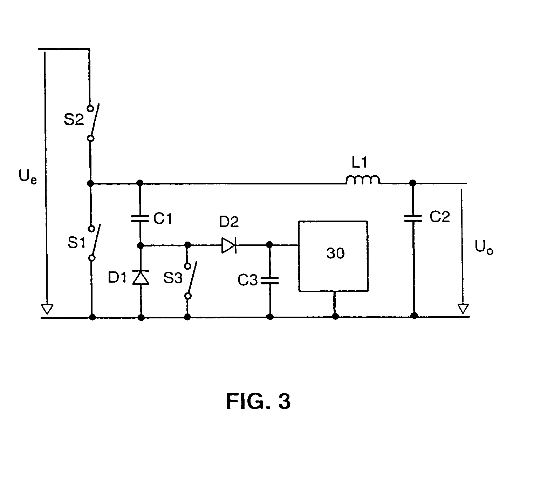

Ein entsprechendes zweites Ausführungsbeispiel zeigt Fig. 3. Dort sind entsprechende Bezugszeichen für dem ersten Ausführungsbeispiel entsprechende Schaltungsteile verwendet worden. Die links eingezeichnete Eingangsspannung Ue könnte beispielsweise von dem Brückengleichrichter B aus Fig. 1 mit evtl. zusätzlichen Filtern geliefert werden. Hier ist jedenfalls kein Wandler als PFC-Schaltung vorgesehen. Daher wird hier eine Hilfsversorgung aus dem Umladestrom in dem Trapezkondensator C1 aufgebaut. Dies geschieht mit den Dioden D1 und D2, dem Schalter S3 und dem Stützkondensator C3. Der Schalter S3 wird hierzu über einen Zweipunktregler angesteuert und regelt somit die Spannung an dem Stützkondensator C3. Eine zu versorgende Schaltung 30 ist mit dem Stützkondensator C3 verbunden und bezieht zu ihrem Betrieb nötige Energie aus C3.

Parallel zu C2 liegt eine Ausgangsspannung Uo an, an die eine Last, beispielsweise eine Entladungslampe oder eine LED anschließbar ist.

Bei abgeschalteter Lampe, d. h. ohne Stromfluss in L1, kann die Halbbrücke S1, S2 in der schon für das erste Ausführungsbeispiel beschriebenen Weise getaktet werden und damit die Hilfsspannungsversorgung aufrecht erhalten.

In diesem Betriebsmodus wird der Resonanzkreis aus L1 und C2 nicht angeregt.

## Patentansprüche

1. Elektronisches Vorschaltgerät für eine Licht emittierende Einrichtung mit einem Wandler (S1, S2, C1) zur Versorgung der Licht emittierenden Einrichtung und
einer Steuerung zum Steuern des Wandlers (S1, S2, C1),
wobei der Wandler (S1, S2, C1) mindestens einen Schalttransistor (S1, S2) mit einem parallel liegenden Trapezkondensator (C1) aufweist und wobei beim Umladen des Trapezkondensators (C1) im Schalttransistor (S1, S2) Schaltverluste auftreten und wobei die Steuerung dazu ausgelegt ist, im Fall eines Ausfalls der Licht emittierenden Einrichtung den Wandler (S1, S2, C1) weiterzubetreiben, um eine Hilfsversorgung für die Steuerung aufrecht zu erhalten, **dadurch gekennzeichnet, dass** die Steuerung dazu ausgelegt ist, beim Weiterbetreiben des Wandlers den
mindestens einen Schalttransistor bei mindestens 80% des an ihm anliegenden Spannungsmaximums so lange einzuschalten, bis die im Trapezkondensator (C1) gespeicherte Ladung abgebaut ist.

2. Vorschaltgerät nach Anspruch 1 mit einem weiteren zweiten, den genannten ersten Wandler (S1, S2, C1) versorgenden Wandler.

3. Vorschaltgerät nach Anspruch 2, bei dem die Steuerung dazu ausgelegt ist, im Fall eines Ausfalls des Licht emittierenden Geräts den ersten (S1, S2, C1) und den zweiten Wandler weiterzubetreiben.

4. Vorschaltgerät nach Anspruch 1 mit einem einstufigen Wandler (S1, S2, C1).

5. Vorschaltgerät nach einem der vorstehenden Ansprüche, bei dem der erste Wandler (S1, S2, C1) eine Halbbrücke mit zwei Schalttransistoren (S1, S2) ist.

6. Vorschaltgerät nach einem der vorstehenden Ansprüche bei dem der Wandler (S1, S2, C1) eine Mehrzahl Schalttransistoren (S1, S2) aufweist, in denen die Schaltverluste alternierend erzeugt werden.

7. Vorschaltgerät nach einem der vorstehenden Ansprüche bei dem die Schaltverluste im Wesentlichen periodisch mit einer einem zweifachen oder ganzzahligen Mehrfachen der Periodendauer der bei dem Ausfall der Licht emittierenden Einrichtung auftretenden Eigenschwingung (L, C1, C2) entsprechenden Periodendauer erzeugt werden.

8. Vorschaltgerät nach einem der vorstehenden Ansprüche, bei dem die Steuerung eine Mikrocontrollersteuerung ist und durch das Weiterbetreiben des Wandlers (S1, S2, C1) die Hilfsversorgung des Mikrocontrollers aufrechterhalten wird.

9. Vorschaltgerät nach einem der vorstehenden Ansprüche, bei dem der zweite Wandler ein SEPIC-Wandler ist.

10. Vorschaltgerät nach einem der vorstehenden Ansprüche, das zum Betreiben einer Niederdruckgasentladungslampe ausgelegt ist.

## Claims

1. Electronic ballast for a light-emitting device having a converter (S1, S2, C1) for supplying power to the light-emitting device, and a controller for controlling the converter (S1, S2, C1), wherein the converter (S1, S2, C1) has at least one switching transistor (S1, S2) with a trapezoidal capacitor (C1) connected in parallel, and wherein, during recharging of the trapezoidal capacitor (C1), switching losses occur in the switching transistor (S1, S2), and wherein the controller is designed to continue to operate the converter (S1, S2, C1) in the event of a failure of the light-emitting device, in order to maintain an auxiliary power supply for the controller, **characterized in that** the controller is designed to switch on at least one switching transistor at at least 80% of the voltage maximum present at said switching transistor during the continued operation of the converter until the charge stored in the trapezoidal capacitor (C1) is dissipated.

2. Ballast according to Claim 1 having a further, second converter supplying power to said first converter (S1, S2, C1).

3. Ballast according to Claim 2, in which the controller is designed to continue to operate the first (S1, S2, C1) and the second converter in the event of a failure of the light-emitting device.

4. Ballast according to Claim 1 having a single-stage converter (S1, S2, C1).

5. Ballast according to one of the preceding claims, in which the first converter (S1, S2, C1) is a half-bridge having two switching transistors (S1, S2).

6. Ballast according to one of the preceding claims, in which the converter (S1, S2, C1) has a plurality of switching transistors (S1, S2), in which the switching losses are produced alternately.

7. Ballast according to one of the preceding claims, in which the switching losses are produced essentially periodically with a period duration which corresponds to an integral multiple, or a multiple with a factor of 2, of the period duration of the natural oscillation (L, C1, C2) occurring in the event of a failure of the light-emitting device.

8. Ballast according to one of the preceding claims, in which the controller is a microcontroller, and the auxiliary power supply of the microcontroller is maintained by the converter (S1, S2, C1) continuing to operate.

9. Ballast according to one of the preceding claims, in which the second converter is an SEPIC converter.

10. Ballast according to one of the preceding claims, which is designed for operating a low-pressure gas discharge lamp.

**Revendications**

1. Ballast électronique pour un dispositif émetteur de lumière comprenant un convertisseur (S1, S2, C1) destiné à l'alimentation du dispositif émetteur de lumière et
une commande destinée à commander le convertisseur (S1, S2, C1),
dans lequel le convertisseur (S1, S2, C1) présente au moins un transistor de commutation (S1, S2) en parallèle avec un condensateur trapézoïdal (C1) et dans lequel lors du rechargement du condensateur trapézoïdal (C1) dans le transistor de commutation (S1, S2) des pertes de commutation se produisent, et dans lequel la commande est conçue de manière à remettre le convertisseur (S1, S2, C1) en marche en cas de défaillance du dispositif émetteur de lumière afin de maintenir une alimentation auxiliaire pour la commande, **caractérisé en ce que** la commande est conçue de manière à mettre en marche, lors de la remise en marche du convertisseur, l'au moins un transistor de commutation à au moins 80 % de la tension maximale qui peut lui être appliquée jusqu'au moment où la charge stockée dans le condensateur trapézoïdal (C1) est supprimée.

2. Ballast selon la revendication 1 comprenant un deuxième convertisseur supplémentaire alimentant ledit premier convertisseur (S1, S2, C1).

3. Ballast selon la revendication 2, dans lequel la commande est conçue de manière à remettre le premier (S1, S2, C1) et le deuxième convertisseur en marche en cas de défaillance de l'appareil émetteur de lumière.

4. Ballast selon la revendication 1 comprenant un convertisseur mono-étage (S1, S2, C1).

5. Ballast selon l'une des revendications précédentes, dans lequel le premier convertisseur (S1, S2, C1) est un demi-pont comprenant deux transistors de commutation (S1, S2).

6. Ballast selon l'une des revendications précédentes, dans lequel le convertisseur (S1, S2, C1) présente une pluralité de transistors de commutation (S1, S2), dans lesquels les pertes de commutation sont générées en alternance.

7. Ballast selon l'une des revendications précédentes, dans lequel les pertes de commutation sont générées pour l'essentiel périodiquement avec une durée de période correspondant à un multiple de deux ou un multiple entier de la durée de période de l'auto-oscillation (L, C1, C2) se produisant en cas de défaillance du dispositif émetteur de lumière.

8. Ballast selon l'une des revendications précédentes, dans lequel la commande est une commande par microcontrôleur et l'alimentation auxiliaire du microcontrôleur est maintenue par le biais de la remise en marche du convertisseur (S1, S2, C1).

9. Ballast selon l'une des revendications précédentes, dans lequel le deuxième convertisseur est un convertisseur SEPIC.

10. Ballast selon l'une des revendications précédentes, qui est conçu de manière à faire fonctionner une lampe à décharge de gaz à basse pression.

**FIG. 1**

**FIG. 2**

7

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030025464 A1
- DE 10110239

**In der Beschreibung aufgeführte Nicht-Patentliteratur**

- **GREGORY IVENSKY ; ILYA ZELTSER ; SAM BEN-YAAKOV.** New Snubbers with Energy Recovery into a Local Power Supply. *PESC'03 34TH ANNUAL POWER ELECTRONICS SPECIALISTS CONFERENCE,* 15. Juni 2003, vol. 3 von 4, ISBN 0-7803-7754-0, 1327-1332